# EUROPEAN PATENT APPLICATION

(11) **EP 4 287 460 A1**
(43) Date of publication of application: **06.12.2023**
(21) Application number: 21922782.4
(22) Date of filing: 27.01.2021
(51) Int. Cl.: H02K 1/18

(54) **ELECTRIC TOOL AND MOTOR**

(71) Applicant: Panasonic Intellectual Property Management Co., Ltd., Kadoma-shi, Osaka 571-0057 (JP)
(72) Inventor: MIZUNO, Mitsumasa, Kadoma-shi, Osaka 571-0057 (JP); OKADA, Kenji, Kadoma-shi, Osaka 571-0057 (JP); TAMURA, Hideki, Kadoma-shi, Osaka 571-0057 (JP); AKO, Yuya, Kadoma-shi, Osaka 571-0057 (JP)
(74) Representative: Appelt, Christian W.
(86) International application number: PCT/JP2021/002728
(87) International publication number: WO 2022/162758

(57) **Abstract**

An object of the present disclosure is to provide an electric tool with the ability to increase the torque of its motor and such a motor. An electric tool includes a motor (1). The motor (1) includes a stator (2) and a rotor (5). The rotor (5) rotates with respect to the stator (2). At least one of the stator (2) or the rotor (5) includes a core (stator core (20) or rotor core (6)) that includes an oriented steel sheet.

## Description

### Technical Field

The present disclosure generally relates to an electric tool and a motor, and more particularly relates to a motor including a stator and a rotor and an electric tool including such a motor.

### Background Art

Patent Literature 1 discloses a brushless motor including a rotor for an electric motor, a motor case, and a stator. The motor case supports the rotor for the electric motor rotatably. The stator is fixed in the motor case. A winding, to which a current is supplied, is wound around the stator.

The brushless motor (motor) of Patent Literature 1 is sometimes required to increase its torque.

### Citation List

### Patent Literature

Patent Literature 1: JP 2017-169402 A

### Summary of Invention

It is therefore an object of the present disclosure to provide an electric tool with the ability to increase the torque of its motor and such a motor.

An electric tool according to an aspect of the present disclosure includes a motor. The motor includes a stator and a rotor. The rotor rotates with respect to the stator. At least one of the stator or the rotor includes a core that includes an oriented steel sheet.

A motor according to another aspect of the present disclosure includes a stator and a rotor. The rotor rotates with respect to the stator. At least one of the stator or the rotor includes a core that includes an oriented steel sheet.

### Brief Description of Drawings

FIG. 1 is a plan view of a motor according to an exemplary embodiment;
FIG. 2 is a side cross-sectional view of the motor;
FIG. 3 is a schematic representation of an electric tool including the motor;
FIG. 4 is a plan view of the motor;
FIGS. 5A and 5B illustrate a method for manufacturing the motor;
FIG. 6 illustrates a method for manufacturing the motor;
FIG. 7A is a plan view of a motor according to a first variation;
FIG. 7B illustrates a method for manufacturing the motor;
FIG. 7C illustrates a method for manufacturing a motor according to a modified example of the first variation;
FIG. 8 is a plan view illustrating a main part of a motor according to a second variation;
FIG. 9 is a plan view illustrating a main part of a motor according to a third variation;
FIG. 10A is a plan view illustrating a main part of a motor according to a fourth variation;
FIG. 10B is a side cross-sectional view illustrating the main part of the motor;
FIG. 11 is a plan view illustrating a main part of a motor according to a fifth variation;
FIG. 12 is a plan view illustrating a rotor of a motor according to a sixth variation;
FIG. 13 is a plan view illustrating a rotor of a motor according to a seventh variation; and
FIG. 14 is a side view illustrating a main part of a motor according to a tenth variation.

### Description of Embodiments

An electric tool 10 and motor 1 according to an exemplary embodiment will now be described with reference to the accompanying drawings. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure. Also, the drawings to be referred to in the following description of embodiments are all schematic representations. Thus, the ratio of the dimensions (including thicknesses) of respective constituent elements illustrated on the drawings does not always reflect their actual dimensional ratio.

### (1) Overview

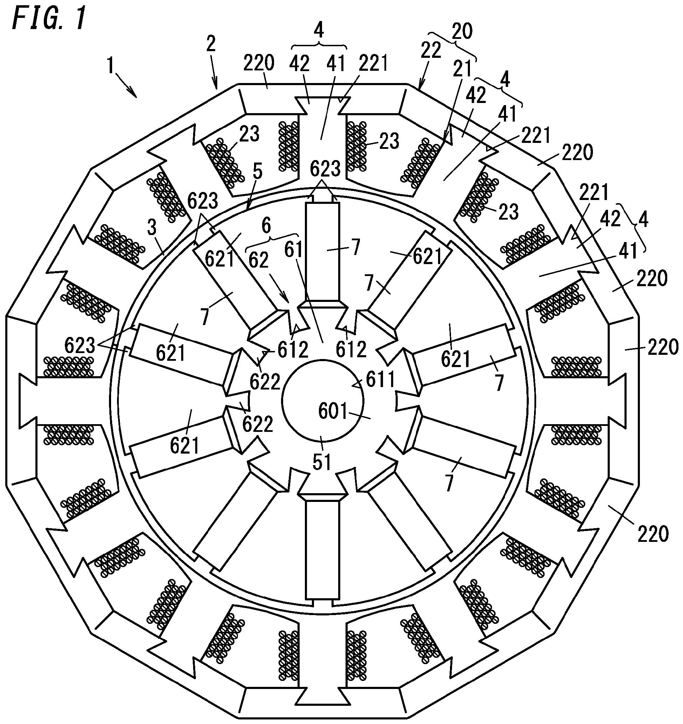

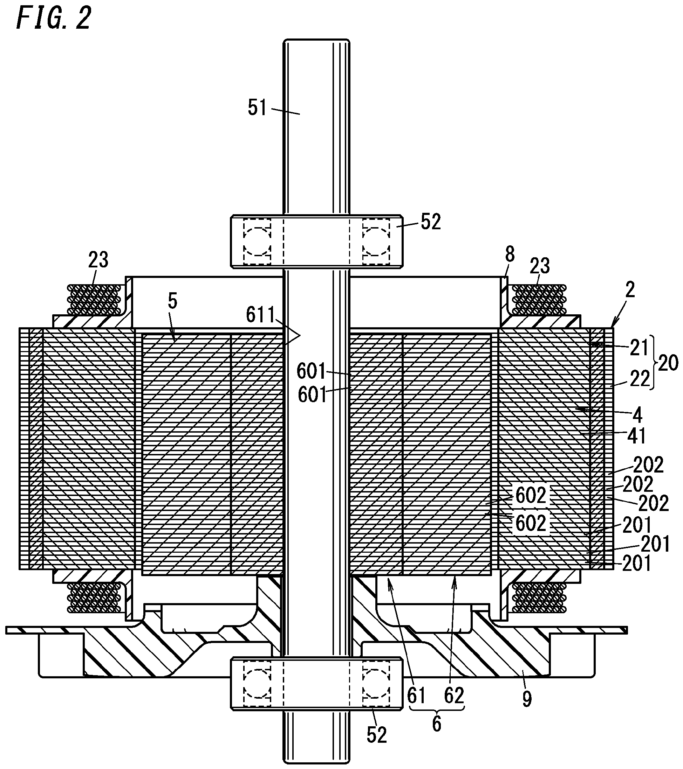

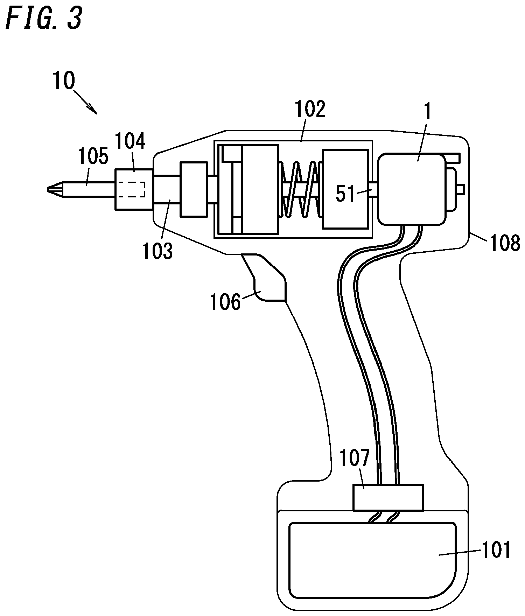

An electric tool 10 (refer to FIG. 3) according to an exemplary embodiment includes a motor 1 as shown in FIGS. 1 and 2. The motor 1 includes a stator 2 and a rotor 5. The rotor 5 rotates with respect to the stator 2. At least one of the stator 2 or the rotor 5 includes a core that includes an oriented steel sheet. In this embodiment, the stator 2 includes a stator core 20 that includes oriented steel sheets and the rotor 5 includes a rotor core 6 that includes oriented steel sheets.

The electric tool 10 according to this embodiment may increase the torque of the motor 1 compared to a situation where the core (stator core 20 and rotor core 6) includes only non-oriented steel sheets.

### (2) Electric tool

As shown in FIG. 3, the electric tool 10 includes the motor 1, a power supply 101, a driving force transmission mechanism 102, an output shaft 103, a chuck 104, a tip tool 105, a trigger volume 106, a control unit 107, and a housing 108. The electric tool 10 drives the tip tool 105 with the driving force of the motor 1.

The housing 108 houses the motor 1, the driving force transmission mechanism 102, the output shaft 103, and the control unit 107.

The motor 1 is a drive source for driving the tip tool 105. The power supply 101 is a DC power supply that supplies a current for driving the motor 1. The power supply 101 may be a battery pack, for example. The battery pack may include, for example, either a single secondary battery or a plurality of secondary batteries. The rotor 5 includes an output shaft (rotary shaft) 51. The driving force of the motor 1 (i.e., the torque of the rotor 5) is transmitted to the driving force transmission mechanism 102 via the rotary shaft 51. The driving force transmission mechanism 102 regulates the driving force of the motor 1 and supplies the regulated driving force to the output shaft 103. The output shaft 103 is driven (in rotation, for example) with the driving force supplied from the driving force transmission mechanism 102. The chuck 104 is fixed to the output shaft 103. The chuck 104 allows the tip tool 105 to be attached thereto removably. Examples of the tip tool 105 (also called a "bit") include screwdrivers, sockets, and drills. One of those various types of tip tools 105 is selected depending on the intended use and attached for use to the chuck 104.

The control unit 107 is a circuit for controlling a current supplied from the power supply 101 to the plurality of coils 23 (refer to FIG. 1) of the motor 1. This allows the control unit 107 to control the rotational velocity of the rotor 5 of the motor 1.

The trigger volume 106 is an operating unit for accepting an operating command for controlling the rotation of the rotor 5 of the motor 1. Performing the operation of pulling the trigger volume 106 enables selectively turning ON or OFF the motor 1. In addition, adjusting the manipulative variable of the operation of pulling the trigger volume 106 allows the rotational velocity of the rotor 5 to be controlled. That is to say, adjusting the manipulative variable of the operation of pulling the trigger volume 106 allows the rotational velocity of the output shaft 103, which rotates in synch with the rotor 5, to be controlled. In accordance with the operating command entered through the trigger volume 106, the control unit 107 either starts or stop rotating the rotor 5 and also controls the rotational velocity of the rotor 5. In this electric tool 10, the tip tool 105 is attached to the chuck 104. Then, the rotational velocity of the rotor 5 is controlled by operating the trigger volume 106, thereby controlling the rotational velocity of the output shaft 103 and the tip tool 105.

Note that the electric tool 10 according to this embodiment includes the chuck 104, thus making the tip tool 105 replaceable depending on the intended use. However, the tip tool 105 does not have to be replaceable. Alternatively, the electric tool 10 may also be designed to allow the user to use only a particular type of tip tool 105.

### (3) Overview of motor

The motor 1 according to this embodiment is a brushless motor. As shown in FIGS. 1 and 2, the motor 1 includes the rotor 5 and the stator 2. The rotor 5 includes the rotor core 6, a plurality of (e.g., ten in FIG. 1) permanent magnets 7, and the output shaft 51. The plurality of permanent magnets 7 are held by the rotor core 6. The stator 2 includes the stator core 20 and a plurality of (e.g., twelve in FIG. 1) coils 23. The stator core 20 is disposed around the rotor core 6. That is to say, the stator core 20 surrounds the rotor core 6. The plurality of coils 23 are wound around the stator core 20. The rotor 5 rotates with respect to the stator 2. Specifically, the magnetic flux generated from the plurality of coils 23 is applied to the plurality of permanent magnets 7, thus causing the rotor 5 to rotate. The torque (driving force) of the rotor 5 is transmitted from the rotary shaft 51 to the driving force transmission mechanism 102 (refer to FIG. 3).

The stator core 20 and the rotor core 6 each include a plurality of steel sheets. Each of the stator core 20 and the rotor core 6 is formed by stacking the plurality of steel sheets one on top of another in the thickness direction. In other words, each of the stator core 20 and the rotor core 6 is a so-called "laminated core." The plurality of steel sheets are coupled together by bonding together each pair of steel sheets that are adjacent to each other in the thickness direction, for example. The direction in which the plurality of steel sheets are stacked one on top of another is aligned with the axis of the rotary shaft 51 of the rotor 5 (that is the longitudinal axis of the rotary shaft 51). More specifically, each steel sheet is a magnetic steel sheet. Each steel sheet is made of a magnetic material. Each steel sheet may be, for example, a silicon steel sheet.

### (4) Stator

The stator core 20 of the stator 2 includes a central core 21 and an outer peripheral portion 22.

The central core 21 includes an inner cylindrical portion 3 having a circular cylindrical shape and a plurality of (e.g., twelve in FIG. 1) teeth 4. The rotor core 6 is disposed inside the inner cylindrical portion 3. Each of the plurality of teeth 4 includes a body portion 41 and protrusions 42. The body portion 41 protrudes, from the inner cylindrical portion 3, in the radially outward direction for the inner cylindrical portion 3. The respective body portions 41 of the plurality of teeth 4 are arranged at regular intervals along the circumference of the inner cylindrical portion 3 (i.e., the rotational direction of the rotor 5). The protrusion 42 protrudes from the tip of the body portion 41. When viewed along the axis of the output shaft 51 of the rotor 5, the protrusion 42 has the shape of a trapezoid, of which the width increases as the distance from the body portion 41 increases.

The stator 2 includes a coil bobbin 8 (refer to FIG. 2). Note that illustration of the coil bobbin 8 is omitted in FIG. 1. The coil bobbin 8 may be made of a synthetic resin, for example. The coil bobbin 8 has electrical insulation properties. The coil bobbin 8 covers a region, including the body portion 41, of each of the plurality of teeth 4. The coil 23 is wound around each body portion 41 from over the coil bobbin 8. That is to say, the plurality of (twelve) coils 23 correspond one to one to the plurality of (twelve) teeth 4 and each coil 23 is wound around a corresponding tooth 4 from over the coil bobbin 8. The plurality of coils 23 may be wound by, for example, concentrated winding.

The outer peripheral portion 22 has a cylindrical shape. The outer peripheral portion 22 according to this embodiment has a square tubular shape. More specifically, when viewed along the axis of the outer peripheral portion 22, the outer peripheral portion 22 has a regular dodecagonal outer peripheral shape. In the following description, a part forming each side of the outer peripheral portion 22 will be hereinafter referred to as an "outer peripheral piece 220." That is to say, the outer peripheral portion 22 has a plurality of (twelve) outer peripheral pieces 220. When viewed along the axis of the output shaft 51, each outer peripheral piece 220 has a rectangular shape.

The outer peripheral portion 22 is attached to the plurality of teeth 4 of the central core 21 to surround the central core 21. In addition, the outer peripheral portion 22 also surrounds the rotor core 6 that is disposed inside the central core 21. Thus, the plurality of teeth 4 of the central core 21 are arranged to protrude from the outer peripheral portion 22 toward the rotor core 6. The outer peripheral portion 22 includes a plurality of (twelve) recesses 221. That is to say, the outer peripheral portion 22 includes as many recesses 221 as the teeth 4. Each of the plurality of recesses 221 is a depression provided on the inner peripheral surface of the outer peripheral portion 22. Each of the plurality of recesses 221 is provided for a corresponding one of the plurality of outer peripheral pieces 220. The plurality of recesses 221 are arranged at regular intervals along the circumference of the outer peripheral portion 22. When viewed along the axis of the output shaft 51 of the rotor 5, each recess 221 has the shape of a trapezoid, of which the width increases outward. The plurality of recesses 221 correspond one to one to the plurality of teeth 4. Each of the plurality of recesses 221 and a corresponding one of the plurality of teeth 4 are fitted into each other. This allows the outer peripheral portion 22 to be attached to the plurality of teeth 4.

In this manner, the stator core 20 (core) is divided into a plurality of divided cores. In this embodiment, the central core 21 and the outer peripheral portion 22 are respective divided cores. That is to say, the stator core 20 includes a plurality of divided cores which are divided when viewed along the axis of the rotary shaft (output shaft 51) of the rotor 5. The plurality of divided cores are coupled to each other. The plurality of divided cores of the stator core 20 are fitted into each other and thereby coupled together. That is to say, the central core 21 and the outer peripheral portion 22 are coupled together by fitting the protrusions 42 of the central core 21 into the recesses 221 of the outer peripheral portion 22.

### (5) Rotor

The rotor core 6 of the rotor 5 is formed in the shape of a circular cylinder which is concentric with the inner cylindrical portion 3 of the stator core 20. The thickness of the rotor core 6 is equal to the thickness of the stator core 20. As used herein, if two numerical values are "equal to each other," the two numerical values do not have to be exactly to each other but may also be different from each other within a prescribed tolerance range.

The output shaft 51 is held inside the rotor core 6. The rotor core 6 and the output shaft 51 rotate integrally with each other.

The rotor core 6 includes: a shaft holder 61 having a shaft hole 611, through which the output shaft 51 is passed; and a rotor body 62 surrounding the shaft holder 61.

The shaft holder 61 has a cylindrical shape. The circular columnar space inside the shaft holder 61 is the shaft hole 611. The shaft holder 61 has a regular decagonal external shape. The shaft holder 61 includes a plurality of (e.g., ten in FIG. 1) recesses 612. Each of the plurality of recesses 612 is a depression provided on the outer peripheral surface of the shaft holder 61. The plurality of recesses 612 are arranged at regular intervals along the circumference of the shaft holder 61. When viewed along the axis of the output shaft 51 of the rotor 5, each recess 612 has the shape of a trapezoid, of which the width increases toward the shaft hole 611. In this embodiment, the shaft holder 61 is made of a magnetic material. Alternatively, the shaft holder 61 may also be made of a non-magnetic material.

The rotor body 62 has the shape of a circular cylinder, which is concentric with the shaft holder 61. The rotor body 62 includes a plurality of (e.g., ten in FIG. 1) fan-shaped portions 621. When viewed along the axis of the output shaft 51, each of the plurality of fan-shaped portions 621 has the shape of a fan, of which the width increases in the radially outward direction for the output shaft 51 (i.e., along the radius of the rotor core 6). In addition, the rotor body 62 further includes protrusions 622 protruding from the plurality of fan-shaped portions 621, respectively. That is to say, the rotor body 62 includes a plurality of (e.g., ten in FIG. 1) protrusions 622. Each of the plurality of protrusions 622 protrudes from one end, adjacent to the output shaft 51, of a corresponding one of the fan-shaped portions 621. The plurality of protrusions 622 are fitted into the recesses 612 of the shaft holder 61. This allows the plurality of fan-shaped portions 621 to be coupled to the shaft holder 61. The rotor body 62 is formed by arranging the plurality of fan-shaped portions 621 in a ring around the shaft holder 61. The plurality of fan-shaped portions 621 are arranged at regular intervals in the rotational direction of the rotor core 6 (i.e., along the circumference of the rotor core 6).

In this manner, the rotor core 6 (core) is divided into a plurality of divided cores. In this embodiment, the shaft holder 61 and the rotor body 62 are respective divided cores. That is to say, the rotor core 6 includes a plurality of divided cores which are divided when viewed along the axis of the rotary shaft (output shaft 51) of the rotor 5. The plurality of divided cores are coupled to each other. The plurality of divided cores of the rotor core 6 are fitted into each other and thereby coupled together. That is to say, the shaft holder 61 and the rotor body 62 are coupled together by fitting the protrusions 622 of the rotor body 62 into the recesses 612 of the shaft holder 61.

A plurality of permanent magnets 7 are arranged to fill the gaps between the plurality of fan-shaped portions 621. That is to say, each pair of fan-shaped portions 621 which are adjacent to each other are arranged to interpose one of the permanent magnets 7 between themselves. Two holding projections 623 protrude from each of the plurality of fan-shaped portions 621. That is to say, the rotor body 62 includes twice as many (i.e., twenty) holding projections 623 as the fan-shaped portions 621. The two holding projections 623 protrude in the circumferential direction from a radially outer end (i.e., adjacent to the stator core 20) of each fan-shaped portion 621. Each holding projection 623 holds a corresponding one of the permanent magnets 7. That is to say, each permanent magnet 7 is disposed inside, along the radius of the rotor core 6, the holding projections 623 respectively protruding from two adjacent fan-shaped portions 621, which are arranged on both sides of the permanent magnet 7. Thus, the holding projections 623 regulate the outward movement of the permanent magnets 7 along the radius of the rotor core 6.

In this manner, the plurality of permanent magnets 7 are housed in the rotor core 6. That is to say, the motor 1 has a so-called "interior permanent magnet (IPM)" structure in which the plurality of permanent magnets 7 are embedded inside the rotor core 6.

Each of the plurality of permanent magnets 7 may be, for example, embedded in the rotor core 6 with an adhesive applied thereto and thereby held by the rotor core 6.

Each permanent magnet 7 has a rectangular parallelepiped shape. When viewed along the axis of the rotor core 6, each permanent magnet 7 has a rectangular shape. Each permanent magnet 7 may be, for example, a neodymium magnet, a ferrite magnet, or a plastic magnet.

The plurality of permanent magnets 7 are arranged as spokes (i.e., arranged radially) around the center of the rotor core 6 (i.e., around the shaft hole 611). As used herein, the expression "the plurality of permanent magnets 7 are arranged as spokes around the center of the rotor core 6" means that the plurality of permanent magnets 7 are arranged along the circumference of the rotor core 6 such that the longitudinal axis of each of the permanent magnets 7 is aligned with the radius of the rotor core 6 when viewed along the axis of the rotor core 6.

The plurality of permanent magnets 7 are arranged at regular intervals along the circumference of the rotor core 6. Each pair of permanent magnets 7, which are adjacent to each other along the circumference of the rotor core 6, are arranged to have their magnetic poles of the same polarity facing each other. This allows each of the plurality of fan-shaped portions 621 to serve as a virtual magnetic pole (i.e., as a magnetic flux outlet and inlet) in the rotor core 6. Along the circumference of the rotor core 6, virtual N and S poles are alternately arranged at the respective regions where the fan-shaped portions 621 are provided.

### (6) Base and bearings

As shown in FIG. 2, the motor 1 further includes an end plate 9 and two bearings 52. A bottomed cylindrical cover is attached to the end plate 9. A housing is formed by the end plate 9 and the cover. The stator 2 and the rotor 5 are housed in the space surrounded with the end plate 9 and the cover. One of the two bearings 52 is fixed to the cover and the other bearing 52 is fixed to the end plate 9. The two bearings 52 rotatably hold the output shaft 51 of the rotor 5.

### (7) Steel sheets of rotor core

As described above, each of the stator core 20 and the rotor core 6 includes a plurality of steel sheets. First, the plurality of steel sheets of the rotor core 6 will be described. As shown in FIG. 2, the rotor core 6 includes a plurality of steel sheets 601 and a plurality of steel sheets 602.

The plurality of steel sheets 601 are stacked one on top of another in the thickness direction. The plurality of steel sheets 601 each have the same shape. The plurality of steel sheets 601 forms the shaft holder 61 of the rotor core 6.

The plurality of steel sheets 602 are stacked one on top of another in the thickness direction. The plurality of steel sheets 602 each have the same shape. The plurality of steel sheets 602 forms the rotor body 62 of the rotor core 6. The plurality of steel sheets 602 is divided into ten parts which respectively form the plurality of (i.e., ten) fan-shaped portions 621.

The plurality of steel sheets 601 are non-oriented steel sheets. More specifically, the plurality of steel sheets 601 are non-oriented magnetic steel sheets. In a non-oriented steel sheet, the magnitude of the magnetic resistivity is substantially constant in every direction perpendicular to the thickness direction.

On the other hand, the plurality of steel sheets 602 are oriented steel sheets. More specifically, the plurality of steel sheets 602 are oriented magnetic steel sheets. That is to say, out of the stator 2 and the rotor 5, the rotor 5 includes a core (rotor core 6) including oriented steel sheets (i.e., the steel sheets 602) and non-oriented steel sheets (i.e., steel sheets 601).

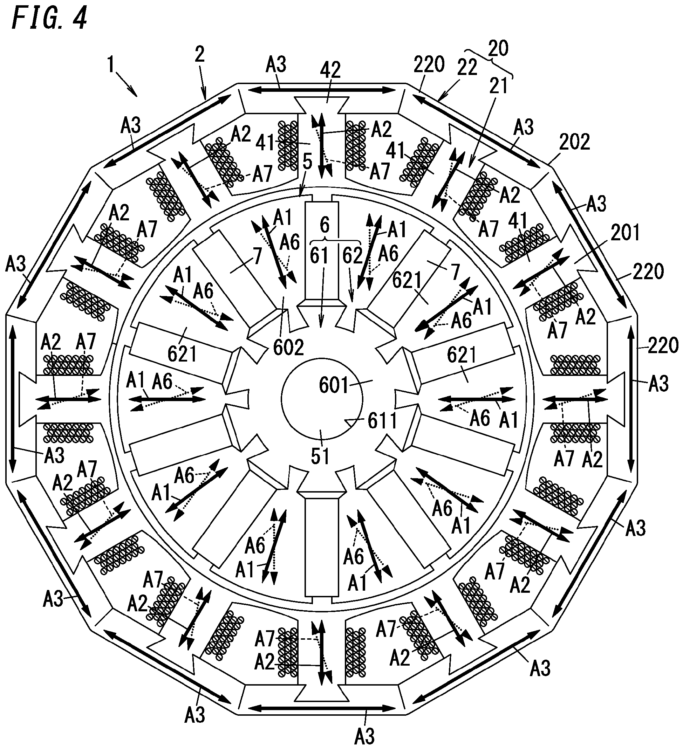

In FIG. 4, the easy magnetization directions of the rotor body 62 made up of oriented steel sheets are indicated by double-headed arrows A1 on the fan-shaped portions 621. The rotor body 62 easily magnetizes in the directions indicated by the double-headed arrows A1. Stated otherwise, the easy magnetization direction is a direction in which the magnetic resistivity is minimum. The easy magnetization direction is also aligned with the direction in which the steel sheet is rolled during the manufacturing process thereof. In the rotor body 62, the easy magnetization direction differs from one of the plurality of fan-shaped portions 621, which form the rotor body 62, to another. The easy magnetization directions of the rotor body 62 are aligned with the radial direction with respect to the output shaft 51 (i.e., the radial direction of the rotor core 6) when viewed along the axis of the rotary shaft (i.e., the output shaft 51) of the rotor 5. That is to say, the steel sheets 602, which are oriented steel sheets of the rotor core 6 (core), include a radial portion having the following property. Specifically, in the radial portion, when viewed along the axis of the rotary shaft (i.e., the output shaft 51) of the rotor 5, the direction in which the magnetic resistivity is minimum is aligned with the radial direction with respect to the rotary shaft (output shaft 51). In this example, the entire steel sheets 602 correspond to the radial portion.

### (9) Steel sheets of stator core

Next, a plurality of steel sheets of the stator core 20 will be described. As shown in FIG. 2, the stator core 20 includes a plurality of steel sheets 201 and a plurality of steel sheets 202.

The plurality of steel sheets 201 are stacked one on top of another in the thickness direction. The plurality of steel sheets 201 each have the same shape. The plurality of steel sheets 201 forms the central core 21 of the stator core 20.

The plurality of steel sheets 202 are stacked one on top of another in the thickness direction. The plurality of steel sheets 202 each have the same shape. The plurality of steel sheets 202 forms the outer peripheral portion 22 of the stator core 20.

The plurality of steel sheets 201 are oriented steel sheets. The plurality of steel sheets 202 are oriented steel sheets. More specifically, the plurality of steel sheets 201 and the plurality of steel sheets 202 are oriented magnetic steel sheets. In FIG. 4, the easy magnetization directions of the central core 21 made up of oriented steel sheets are indicated by double-headed arrows A2 on the central core 21. The central core 21 easily magnetizes in the directions indicated by the double-headed arrows A2. In the central core 21, the easy magnetization direction differs from one of the plurality of teeth 4, which form the central core 21, to another. The easy magnetization directions of the central core 21 are aligned with the radial direction with respect to the output shaft 51 (i.e., the radial direction of the rotor core 6) when viewed along the axis of the rotary shaft (i.e., the output shaft 51) of the rotor 5. That is to say, the steel sheets 201, which are oriented steel sheets of the stator core 20 (core), include a radial portion having the following property. Specifically, in the radial portion, when viewed along the axis of the rotary shaft (i.e., the output shaft 51) of the rotor 5, the direction in which the magnetic resistivity is minimum is aligned with the radial direction with respect to the rotary shaft (output shaft 51). In this example, the entire steel sheets 201 correspond to the radial portion.

That is to say, in the stator core 20, each of the plurality of teeth 4 includes oriented steel sheets (steel sheets 201) having the following property. Specifically, the magnetic resistivity of the steel sheets 201 along the radius of the outer peripheral portion 22 (i.e., the radial direction with respect to the output shaft 51) is less than the magnetic resistivity of the steel sheets 201 along the circumference of the outer peripheral portion 22.

In FIG. 4, the easy magnetization directions of the outer peripheral portion 22 made up of oriented steel sheets are indicated by double-headed arrows A3 on the outer peripheral portion 22. The outer peripheral portion 22 easily magnetizes in the directions indicated by the double-headed arrows A3. In the outer peripheral portion 22, the easy magnetization direction differs from one of the plurality of outer peripheral pieces 220, which form the outer peripheral portion 22, to another. The easy magnetization direction in each of the plurality of outer peripheral pieces 220 of the outer peripheral portion 22 is aligned with the longitudinal axis of the outer peripheral piece 220. The longitudinal axis of each outer peripheral piece 220 corresponds to the circumference of the outer peripheral portion 22.

That is to say, the outer peripheral portion 22 includes oriented steel sheets (steel sheets 202) having the following property. Specifically, the magnetic resistivity of the steel sheets 202 along the circumference of the outer peripheral portion 22 is less than the magnetic resistivity of the steel sheets 202 along the radius of the outer peripheral portion 22.

### (9) Operation and advantages

The magnetic flux generated by each of the plurality of permanent magnets 7 moves along the radius of the rotor core 6 inside (a corresponding fan-shaped portion 621 of) the rotor body 62 to reach the stator core 20. In this case, the easy magnetization directions of the rotor body 62 are aligned with the radius of the rotor core 6 (i.e., the radial direction with respect to the output shaft 51). That is to say, the easy magnetization directions are aligned with the direction of the magnetic flux. Thus, the iron loss to be caused by the rotor body 62 may be reduced compared to a situation where the rotor body 62 includes only non-oriented steel sheets.

Also, the magnetic flux generated by the rotor core 6 moves along the radius of the outer peripheral portion 22 inside the plurality of teeth 4 of the central core 21 of the stator core 20 to reach the outer peripheral portion 22. In this case, the easy magnetization directions of the central core 21 are aligned with the radius of the outer peripheral portion 22 (i.e., the radial direction with respect to the output shaft 51). That is to say, the easy magnetization directions are aligned with the direction of the magnetic flux. Thus, the iron loss to be caused by the central core 21 may be reduced compared to a situation where the central core 21 includes only non-oriented steel sheets.

Meanwhile, the magnetic flux that has reached the outer peripheral portion 22 from the plurality of teeth 4 moves along the circumference of the outer peripheral portion 22 to reach the rotor core 6 via the plurality of teeth 4. In this case, the easy magnetization directions of the outer peripheral portion 22 are aligned with the circumference of the outer peripheral portion 22. That is to say, the easy magnetization directions are aligned with the direction of the magnetic flux. Thus, the iron loss to be caused by the outer peripheral portion 22 may be reduced compared to a situation where the outer peripheral portion 22 includes only non-oriented steel sheets.

As can be seen, reducing the iron loss to be caused by the motor 1 enables increasing the torque of the motor 1. More specifically, if the magnitude of a current to be supplied to the plurality of coils 23 is determined in advance, then the torque to be produced by this current may be increased.

### (10) Method for manufacturing stator core

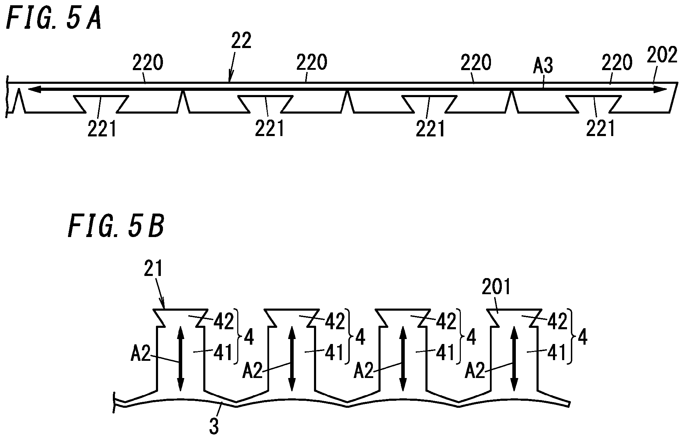

Next, an exemplary method for manufacturing the stator core 20 will be described with reference to FIGS. 5A and 5B.

A member which has been manufactured to easily magnetize in one direction is provided as a prototype of each of the steel sheets 202 that form the outer peripheral portion 22 of the stator core 20. A plurality of such members are stacked one on top of another and subjected to a punching process, for example, thereby forming an outer peripheral portion 22 as shown in FIG. 5A. The outer peripheral portion 22 is formed first in a rectangular shape. That is to say, the outer peripheral portion 22 is formed such that a plurality of outer peripheral pieces 220 are connected together in line in the easy magnetization direction (i.e., the direction indicated by the double-headed arrow A3). Bending the plurality of outer peripheral pieces 220 at their boundaries in this state turns the outer peripheral portion 22 into a cylindrical shape as shown in FIG. 1. Furthermore, coupling, by welding, for example, an outer peripheral piece 220, located at a first end, out of the plurality of outer peripheral pieces 220 that are connected together in the circumferential direction and another outer peripheral piece 220, located at a second end opposite from the first end, out of the plurality of outer peripheral pieces 220 turns the outer peripheral portion 22 into its final shape for use in the motor 1. Alternatively, the outer peripheral piece 220 at the first end and the outer peripheral piece 220 at the second end may also be coupled together by, for example, fitting a projection provided for one of these two pieces into a recess provided for the other piece.

Meanwhile, a member which has been manufactured to easily magnetize in one direction is also provided as a prototype of each of the steel sheets 201 that form the central core 21 of the stator core 20. A plurality of such members are stacked one on top of another and subjected to a punching process, for example, thereby forming the central core 21 as shown in FIG. 5B. The central core 21 is first formed such that the inner cylindrical portion 3 thereof has a linear shape. That is to say, the central core 21 is formed such that the plurality of teeth 4 are connected together in one direction via the inner cylindrical portion 3. In this case, the direction in which the plurality of teeth 4 are arranged side by side is perpendicular to the easy magnetization direction (i.e., the direction indicated by the double-headed arrows A2). Bending the inner cylindrical portion 3 between the plurality of teeth 4 in this state turns the inner cylindrical portion 3 into a cylindrical shape as shown in FIG. 1. Furthermore, coupling, by welding, for example, a first circumferential end of the inner cylindrical portion 3 and a second circumferential end thereof, located opposite from the first circumferential end, turns the central core 21 into its final shape for use in the motor 1. Alternatively, the first and second circumferential ends of the inner cylindrical portion 3 may also be coupled together by, for example, fitting a projection provided for one of these two circumferential ends into a recess provided for the other circumferential end.

After (or in parallel with) such assembling of the outer peripheral portion 22 and the central core 21, the outer peripheral portion 22 and the central core 21 are coupled to each other by fitting the protrusions 42 into the recesses 221. In this manner, the stator core 20 is completed.

### (11) Method for manufacturing rotor core

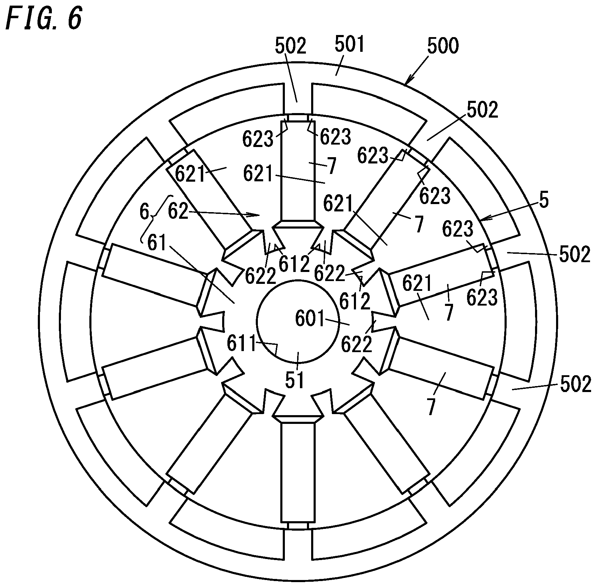

Next, an exemplary method for manufacturing the rotor core 6 will be described with reference to FIG. 6.

The rotor core 6 may be manufactured, for example, in the following manner. First, the plurality of fan-shaped portions 621 of the rotor body 62 are manufactured on an individual basis. Thereafter, the plurality of fan-shaped portions 621 and the shaft holder 61 are coupled to each other by fitting the protrusions 622 into the recesses 612.

In the next process step, i.e., in the process step of inserting the plurality of permanent magnets 7 into the rotor core 6, a positioning jig 500 is used. The positioning jig 500 includes a circular cylindrical portion 501 and a plurality of (e.g., ten in FIG. 6) projections 502. The plurality of projections 502 protrude from the inner surface of the circular cylindrical portion 501.

The positioning jig 500 is arranged to surround the plurality of fan-shaped portions 621. The plurality of projections 502 of the positioning jig 500 correspond one to one to the plurality of permanent magnets 7. Each projection 502 comes into contact with the two holding projections 623 provided outside of the region where a corresponding permanent magnet 7 is to be disposed. This allows the plurality of fan-shaped portions 621 to be positioned between the shaft holder 61 and the positioning jig 500. Thereafter, the plurality of permanent magnets 7 are inserted into the gaps between the plurality of fan-shaped portions 621. The plurality of fan-shaped portions 621 and the plurality of permanent magnets 7 are bonded together with an adhesive. This allows the plurality of fan-shaped portions 621 to be fixed. Thereafter, the positioning jig 500 is removed from the rotor 5. In this manner, the rotor core 6 is completed.

### (First variation)

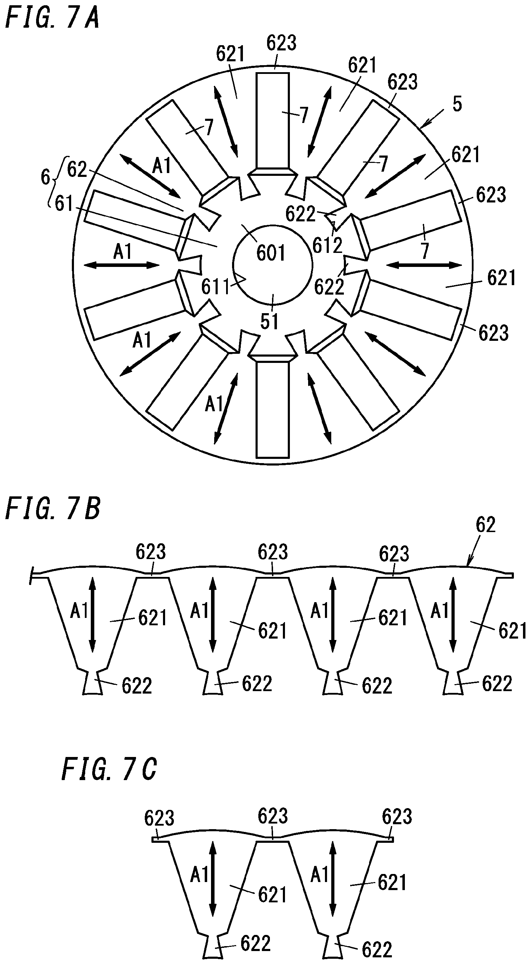

Next, a first variation of the exemplary embodiment will be described with reference to FIGS. 7A and 7B. In the following description, any constituent element of this first variation, having the same function as a counterpart of the embodiment described above, will be designated by the same reference numeral as that counterpart's, and description thereof will be omitted herein.

As shown in FIG. 7A, in the motor 1 according to this first variation, the outer peripheral portion of the rotor core 6 is continuous, which is a difference from the exemplary embodiment described above. That is to say, each of the plurality of fan-shaped portions 621 of the rotor core 6 is connected to two adjacent fan-shaped portions 621 via the holding projections 623 provided at the outer peripheral portion. The holding projections 623 provided are as many as the fan-shaped portions 621. In FIG. 7A, ten holding projections 623 are provided.

As can be seen, according to this variation, the plurality of fan-shaped portions 621 are connected together, thus making it easier to assemble the rotor core 6 compared to a situation where the plurality of fan-shaped portions 621 are separated (cut off) from each other as in the exemplary embodiment described above. As used herein, to be "cut off" refers to not only a state where a plurality of members are manufactured by cutting off a single member but also a state where a plurality of members are manufactured as separate members from the beginning. An exemplary method for manufacturing the rotor core 6 will be described with reference to FIG. 7B.

A member which has been manufactured to easily magnetize in one direction is provided as a prototype of each of the steel sheets 602 that form the rotor body 62 of the rotor core 6. A plurality of such members are stacked one on top of another and subjected to a punching process, for example, thereby forming the rotor body 62 as shown in FIG. 7B. The rotor body 62 is formed first such that a plurality of fan-shaped portions 621 are connected together in one direction via the plurality of holding projections 623. That is to say, the plurality of fan-shaped portions 621 and the plurality of holding projections 623 are formed as a single integral member. In this case, the direction in which the plurality of fan-shaped portions 621 are arranged side by side is perpendicular to the easy magnetization direction (i.e., the direction indicated by the double-headed arrows A1). Bending the plurality of holding projections 623 in this state turns the rotor body 62 into the shape in which the plurality of fan-shaped portions 621 are arranged in a ring as shown in FIG. 7A. Furthermore, coupling, by welding, for example, a first circumferential end of the rotor body 62 and a second circumferential end thereof, located opposite from the first circumferential end, turns the rotor body 62 into its final shape for use in the motor 1. Alternatively, the first and second circumferential ends of the rotor body 62 may also be coupled together by, for example, fitting a projection provided for one of these two circumferential ends into a recess provided for the other circumferential end.

In addition, the shaft holder 61 and the rotor core 6 are also coupled together by fitting the protrusions 622 into the recesses 612.

According to a modified example of this first variation, not all fan-shaped portions 621 and all holding projections 623 are formed as a single member but at least two fan-shaped portions 621 and at least two holding projections 623 may be formed as a single member. For example, a member which has been manufactured to easily magnetize in one direction is provided as a prototype of each of the steel sheets 602. A plurality of such members are stacked one on top of another and subjected to a punching process, for example, thereby forming a member in which two fan-shaped portions 621 are connected together via a holding projection 623 as shown in FIG. 7C. A rotor body 62 in which a plurality of fan-shaped portions 621 are arranged in a ring as shown in FIG. 7A may be obtained by forming a plurality of members, each having the configuration shown in FIG. 7C, and coupling the plurality of members together via the holding projections 623.

### (Second variation)

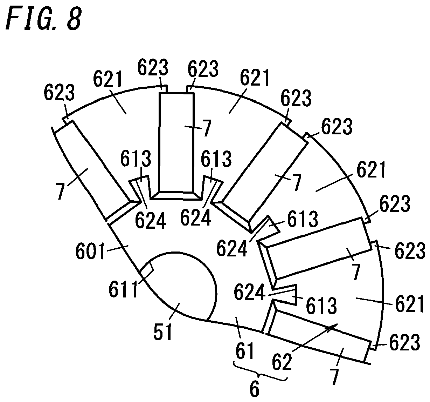

Next, a second variation of the exemplary embodiment will be described with reference to FIG. 8. In the following description, any constituent element of this second variation, having the same function as a counterpart of the embodiment described above, will be designated by the same reference numeral as that counterpart's, and description thereof will be omitted herein.

In the rotor core 6 according to this second variation, the rotor body 62 has a plurality of recesses 624 in the plurality of fan-shaped portions 621, instead of the plurality of protrusions 622. The rotor core 6 has a plurality of protrusions 613 protruding from the shaft holder 61, instead of the plurality of recesses 612 of the shaft holder 61. The shaft holder 61 and the rotor body 62 are coupled together by fitting the protrusions 613 into the recesses 624.

In this variation, the shaft holder 61 may be made of a non-magnetic material. Providing the plurality of recesses 624 as in this second variation for the rotor body 62 made of a magnetic material may reduce the amount of magnetic material for use to make the rotor core 6.

As described for this second variation, the protrusions and recesses provided to couple the shaft holder 61 and the rotor body 62 together may be interchanged with each other, compared to the exemplary embodiment. Optionally, the protrusion and recesses provided to couple the central core 21 and outer peripheral portion 22 of the stator core 20 may also be interchanged with each other, compared to the exemplary embodiment.

### (Third variation)

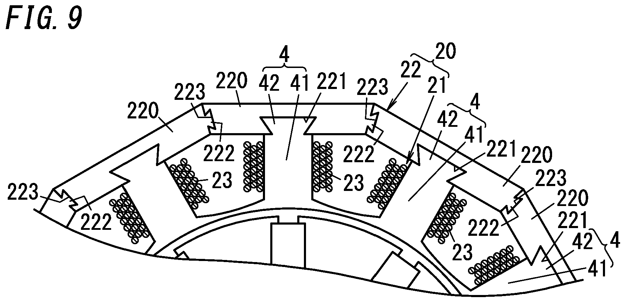

Next, a third variation of the exemplary embodiment will be described with reference to FIG. 9. In the following description, any constituent element of this third variation, having the same function as a counterpart of the embodiment described above, will be designated by the same reference numeral as that counterpart's, and description thereof will be omitted herein.

The outer peripheral portion 22 according to this third variation has a plurality of protrusions 222 and a plurality of recesses 223. More specifically, one of the protrusions 222 and one of the recesses 223 are respectively provided at two longitudinal ends of each of the plurality of outer peripheral pieces 220 (i.e., at both ends along the circumference of the outer peripheral portion 22). Specifically, the protrusion 222 protrudes from a first end of each of the plurality of outer peripheral pieces 220 and the recess 223 is provided at a second end of each of the plurality of outer peripheral pieces 220.

The plurality of outer peripheral pieces 220, which have been formed separately from each other, are coupled together by fitting their protrusions 222 into their recesses 223.

In this manner, the stator core 20 (core) is divided into a plurality of divided cores. In this variation, the central core 21 and the plurality of outer peripheral pieces 220 are respective divided cores. That is to say, the stator core 20 includes a plurality of divided cores which are divided when viewed along the axis of the rotary shaft (output shaft 51) of the rotor 5. The plurality of divided cores are coupled to each other. The plurality of divided cores of the stator core 20 are fitted into each other and thereby coupled together. That is to say, the plurality of outer peripheral pieces 220 are coupled together by fitting their protrusions 222 into their recesses 223. In addition, the central core 21 and the outer peripheral portion 22 are coupled together by fitting the protrusions 42 of the central core 21 into the recesses 221 of the outer peripheral portion 22.

### (Fourth variation)

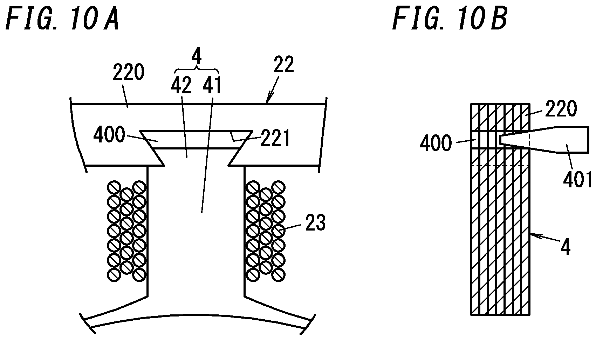

Next, a fourth variation of the exemplary embodiment will be described with reference to FIGS. 10A and 10B. In the following description, any constituent element of this fourth variation, having the same function as a counterpart of the embodiment described above, will be designated by the same reference numeral as that counterpart's, and description thereof will be omitted herein.

In this fourth variation, when the protrusion 42 of each tooth 4 is fitted into a corresponding recess 221 of the outer peripheral portion 22, a gap 400 is left between the bottom of the recess 221 and the protrusion 42. An inserting member 401 is inserted into this gap 400 as shown in FIG. 10B. The inserting member 401 has a wedge shape. More specifically, the tip of the inserting member 401 has a trapezoidal cross-sectional shape. Inserting the inserting member 401 into the gap 400 may reduce the chances of causing backlash between the outer peripheral portion 22 and the tooth 4.

Alternatively, the tip of the inserting member 401 may also have a triangular cross-sectional shape.

As the inserting member 401, an elastic material such as rubber or a cushioning member of foamed polyurethane, for example, may be used. Alternatively, as the inserting member 401, a filler using, for example, a silicone resin as its material, a coating agent, an adhesive, or a sealing agent may also be used.

In addition, the inserting member 401 may also be inserted into the gap left between each recess 612 and protrusion 622 of the rotor core 6.

### (Fifth variation)

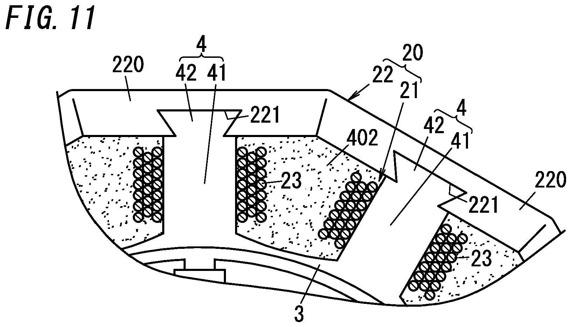

Next, a fifth variation of the exemplary embodiment will be described with reference to FIG. 11. In the following description, any constituent element of this fifth variation, having the same function as a counterpart of the embodiment described above, will be designated by the same reference numeral as that counterpart's, and description thereof will be omitted herein.

The motor 1 according to this fifth variation includes a filling portion 402, which is a difference from the exemplary embodiment described above. The filling portion 402 fills the gaps around the plurality of divided cores. The filling portion 402 may be a filler using, for example, a silicone resin as its material, a coating agent, an adhesive, or a sealing agent. In FIG. 11, regions provided with the filling portion 402 are indicated by dots.

Among the constituent elements of the stator core 20, the central core 21 and the outer peripheral portion 22 correspond to respective divided cores. The filling portion 402 is provided in the space (gaps) surrounded with the plurality of teeth 4 of the central core 21 and the outer peripheral portion 22. This reduces the chances of causing backlash between the plurality of teeth 4 and the outer peripheral portion 22.

### (Sixth variation)

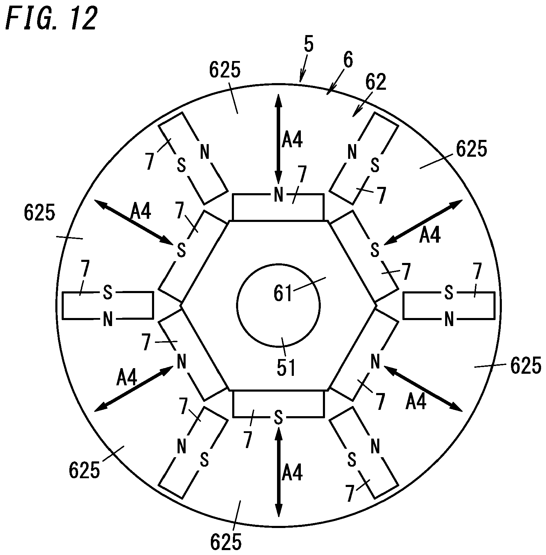

Next, a sixth variation of the exemplary embodiment will be described with reference to FIG. 12. In the following description, any constituent element of this sixth variation, having the same function as a counterpart of the embodiment described above, will be designated by the same reference numeral as that counterpart's, and description thereof will be omitted herein.

The rotor 5 according to this sixth variation includes twelve permanent magnets 7. The twelve permanent magnets 7 are arranged outside the shaft holder 61 of the rotor core 6. In addition, the rotor body 62 includes six outlet portions 625 instead of the plurality of fan-shaped portions 621. The six outlet portions 625 are constituent elements corresponding to the plurality of fan-shaped portions 621. Each of the six outlet portions 625 serves as a virtual magnetic pole (i.e., as a magnetic flux inlet and outlet) in the rotor core 6. The six outlet portions 625 are arranged side by side along the circumference of the rotor core 6. Along the circumference of the rotor core 6, a virtual N-pole in a region where one of the six outlet portions 625 is provided alternates with a virtual S-pole in a region where an adjacent one of the six outlet portions 625 is provided.

In FIG. 12, if the magnetic pole of a part, adjacent to one of the outlet portions 625, of each permanent magnet 7 is N-pole, then the N-pole of the permanent magnet 7 is designated by "N." On the other hand, if the magnetic pole of a part, adjacent to one of the outlet portions 625, of each permanent magnet 7 is S-pole, then the S-pole of the permanent magnet 7 is designated by "S." Note that "N" and "S" in FIG. 12 are letters shown there only for illustrative purposes, not letters actually inscribed there.

Each outlet portion 625 is adjacent to three permanent magnets 7. That is to say, one permanent magnet 7 is interposed between each outlet portion 625 and the output shaft 51 of the rotor 5. In addition, two more permanent magnets 7 are respectively arranged on both sides of each outlet portion 625 along the circumference of the rotor core 6.

The easy magnetization direction (i.e., the direction indicated by the arrow A4) of each outlet portion 625 is aligned with the radial direction with respect to the output shaft 51 (i.e., the radius of the rotor core 6) when viewed along the axis of the rotary shaft (i.e., the output shaft 51) of the rotor 5.

Even if the plurality of permanent magnets 7 are arranged as in this sixth variation, the easy magnetization directions of (the outlet portions 625 of) the rotor body 62 are also aligned with the direction of the magnetic flux generated by the plurality of permanent magnets 7 as in the exemplary embodiment described above. Thus, the iron loss to be caused to the rotor body 62 may also be reduced.

### (Seventh variation)

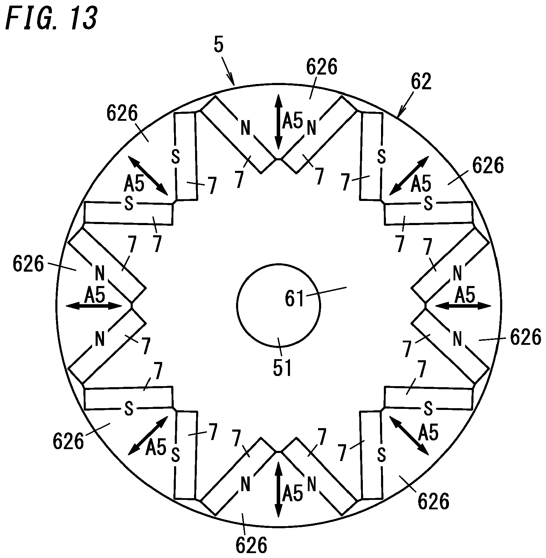

Next, a seventh variation of the exemplary embodiment will be described with reference to FIG. 13. In the following description, any constituent element of this seventh variation, having the same function as a counterpart of the embodiment described above, will be designated by the same reference numeral as that counterpart's, and description thereof will be omitted herein.

The rotor 5 according to this seventh variation includes sixteen permanent magnets 7. The sixteen permanent magnets 7 are arranged outside the shaft holder 61 of the rotor core 6. In addition, the rotor body 62 includes eight outlet portions 626 instead of the plurality of fan-shaped portions 621. The six outlet portions 626 are constituent elements corresponding to the plurality of fan-shaped portions 621. Each of the eight outlet portions 626 serves as a virtual magnetic pole (i.e., as a magnetic flux inlet and outlet) in the rotor core 6. The six outlet portions 626 are arranged side by side along the circumference of the rotor core 6. Along the circumference of the rotor core 6, a virtual N-pole in a region where one of the eight outlet portions 626 is provided alternates with a virtual S-pole in a region where an adjacent one of the eight outlet portions 626 is provided.

In FIG. 13, if the magnetic pole of a part, adjacent to one of the outlet portions 626, of each permanent magnet 7 is N-pole, then the N-pole of the permanent magnet 7 is designated by "N." On the other hand, if the magnetic pole of a part, adjacent to one of the outlet portions 626, of each permanent magnet 7 is S-pole, then the S-pole of the permanent magnet 7 is designated by "S." Note that "N" and "S" in FIG. 13 are letters shown there only for illustrative purposes, not letters actually inscribed there.

Each outlet portion 626 is adjacent to two permanent magnets 7. That is to say, each outlet portion 626 is interposed between two permanent magnets 7 which are arranged in a V-pattern.

The easy magnetization direction (i.e., the direction indicated by the arrow A5) of each outlet portion 626 is aligned with the radial direction with respect to the output shaft 51 (i.e., the radius of the rotor core 6) when viewed along the axis of the rotary shaft (i.e., the output shaft 51) of the rotor 5.

Even if the plurality of permanent magnets 7 are arranged as in this seventh variation, the easy magnetization directions of (the outlet portions 626 of) the rotor body 62 are also aligned with the direction of the magnetic flux generated by the plurality of permanent magnets 7 as in the exemplary embodiment described above. Thus, the iron loss to be caused to the rotor body 62 may also be reduced.

### (Eighth variation)

Next, an eighth variation of the exemplary embodiment will be described with reference to FIG. 4. In the following description, any constituent element of this eighth variation, having the same function as a counterpart of the embodiment described above, will be designated by the same reference numeral as that counterpart's, and description thereof will be omitted herein.

The oriented steel sheets of at least one of the rotor core 6 (core) or the stator core 20 (core) include a tilted portion having the following property. Specifically, in the tilted portion, when viewed along the axis of the rotary shaft (i.e., the output shaft 51) of the rotor 5, the direction in which the magnetic resistivity is minimum is oblique to the radial direction with respect to the rotary shaft (output shaft 51).

First, a situation where the oriented steel sheets (steel sheets 602) of the rotor core 6 include the tilted portion will be described. In the exemplary embodiment described above, the easy magnetization directions in the rotor body 62 are aligned with the radial direction indicated by the double-headed arrows A1. On the other hand, in this eighth variation, the easy magnetization directions in the rotor core 6 are the directions indicated by the double-headed arrows A6, which are oblique to the radial direction. Thus, the steel sheets 602 include a tilted portion in which the easy magnetization directions are indicated by the double-headed arrows A6. In this variation, the entire steel sheets 602 correspond to the tilted portion.

Next, a situation where the oriented steel sheets (steel sheets 201) of the stator core 20 include the tilted portion will be described. In the exemplary embodiment described above, the easy magnetization directions in the central core 21 of the stator core 20 are aligned with the radial direction indicated by the double-headed arrows A2. On the other hand, in this eighth variation, the easy magnetization directions in the central core 21 are the directions indicated by the double-headed arrows A7, which are oblique to the radial direction. Thus, the steel sheets 201 include a tilted portion in which the easy magnetization directions are indicated by the double-headed arrows A7. In this variation, the entire steel sheets 201 correspond to the tilted portion. The tilt angle defined by the double-headed arrows A6 with respect to the radial direction is equal to the tilt angle defined by the double-headed arrows A7 with respect to the radial direction.

This eighth variation improves, when the motor 5 rotates in one direction, the characteristics of the motor 1, compared to a situation where the direction in which the magnetic resistivity is minimum (i.e., the easy magnetization direction) is aligned with the radial direction with respect to the rotary shaft (output shaft 51). That is to say, defining the easy magnetization directions obliquely to the radial direction allows the magnetic flux to be used more efficiently when the rotor 5 rotates in one direction.

### (Ninth variation)

Next, a ninth variation of the exemplary embodiment will be described with reference to FIG. 4. In the following description, any constituent element of this ninth variation, having the same function as a counterpart of the embodiment described above, will be designated by the same reference numeral as that counterpart's, and description thereof will be omitted herein.

The outer peripheral portion 22 according to this ninth variation is made up of non-oriented steel sheets. That is to say, each of the plurality of steel sheets 202 that form the outer peripheral portion 22 is a non-oriented steel sheet. Meanwhile, the central core 21 has the same configuration as its counterpart of the exemplary embodiment. That is to say, the plurality of teeth 4 are made up of oriented steel sheets.

That is to say, at least one of the stator 2 or the rotor 5 includes a core including oriented steel sheets and non-oriented steel sheets. According to this ninth variation, the stator 2 includes a core (stator core 20) including oriented steel sheets (steel sheets 201) and non-oriented steel sheets (steel sheets 202). The rotor 5 includes a core (rotor core 6) including oriented steel sheets (steel sheets 602) and non-oriented steel sheets (steel sheets 601).

If the outer peripheral portion 22 is made up of non-oriented steel sheets as in this ninth variation, it is easier to either narrow or even eliminate the gap between the plurality of outer peripheral pieces 220 of the outer peripheral portion 22, compared to a situation where the outer peripheral portion 22 is made up of oriented steel sheets. For example, each steel sheet 202 may be manufactured by punching an annular pattern out of a single sheet as a prototype of the steel sheet 202. In that case, the seams and gaps between the plurality of outer peripheral pieces 220 may be eliminated. Consequently, this makes it easier to reduce the magnetic resistance between the plurality of outer peripheral pieces 220 than in the exemplary embodiment in which the magnetic resistance between the plurality of outer peripheral pieces 220 is reduced by narrowing the gaps between the plurality of outer peripheral pieces 220.

### (Tenth variation)

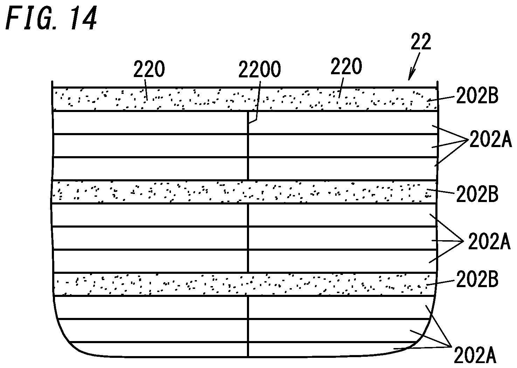

Next, a tenth variation of the exemplary embodiment will be described with reference to FIG. 14. In the following description, any constituent element of this tenth variation, having the same function as a counterpart of the embodiment described above, will be designated by the same reference numeral as that counterpart's, and description thereof will be omitted herein.

At least one of the stator 2 or the rotor 5 includes a laminated core having a laminated structure in which oriented steel sheets and non-oriented steel sheets are stacked one on top of another. In the following description of this tenth variation, a situation where the outer peripheral portion 22 of the stator 2 is a laminated core having a laminated structure in which oriented steel sheets and non-oriented steel sheets are stacked will be described as an example. Alternatively, at least one of the central core 21 of the stator 2, the shaft holder 61 of the rotor 5, or the rotor body 62 of the rotor 5 may also be a laminated core having a laminated structure in which oriented steel sheets and non-oriented steel sheets are stacked. That is to say, the configuration to be described below is also applicable to a situation where the central core 21 of the stator 2, the shaft holder 61 of the rotor 5, or the rotor body 62 of the rotor 5 is a laminated core having a laminated structure in which oriented steel sheets and non-oriented steel sheets are stacked one on top of another.

The outer peripheral portion 22 includes a plurality of oriented steel sheets 202A and a plurality of non-oriented steel sheets 202B. The outer peripheral portion 22 is formed by stacking the plurality of oriented steel sheets 202A and the plurality of non-oriented steel sheets 202B in the thickness direction. The plurality of oriented steel sheets 202A and the plurality of non-oriented steel sheets 202B are combined together by bonding multiple sheets that are adjacent to each other in the thickness direction.

Out of the plurality of oriented steel sheets 202A, a predetermined number (e.g., three in FIG. 14) of one or more oriented steel sheets 202A are stacked one on top of another. The predetermined number of oriented steel sheets 202A are sandwiched between two non-oriented steel sheets 202B. The outer peripheral portion 22 is formed by repeatedly stacking multiple sets of such oriented and non-oriented steel sheets one on top of another.

As already described for the ninth variation, each non-oriented steel sheet 202B may be manufactured by punching an annular pattern out of a single sheet as a prototype of each of the non-oriented steel sheets 202B. In that case, the seams and gaps between the plurality of outer peripheral pieces 220 may be eliminated from each layer of the non-oriented steel sheet 202B. On the other hand, the oriented steel sheets 202A may be manufactured, for example, in the same way as the oriented steel sheets 202 according to the exemplary embodiment (see "(10) Method for manufacturing stator core" section and refer to FIG. 5A). Thus, seams 2200 are left between the plurality of outer peripheral pieces 220 in each layer of the oriented steel sheet 202A.

The outer peripheral portion 22 may be assembled by stacking the plurality of non-oriented steel sheets 202B and the plurality of oriented steel sheets 202A one on top of another in the thickness direction and coupling the plurality of non-oriented steel sheets 202B and the plurality of oriented steel sheets 202A together by bonding, for example. Even if each of the plurality of oriented steel sheets 202A is separated (cut off) into multiple parts at the seam 2200, the plurality of outer peripheral pieces 220 are connected together seamlessly in each layer of the non-oriented steel sheet 202B. Thus, the multiple parts of the oriented steel sheet 202A may be easily arranged in a ring and assembled together. In addition, the plurality of outer peripheral pieces 220 are connected together seamlessly in each layer of the non-oriented steel sheet 202B, and therefore, may have their mechanical strength increased compared to a situation where the layer of the non-oriented steel sheet 202B has seams.

According to this tenth variation, the number of the oriented steel sheets 202A is larger than the number of the non-oriented steel sheets 202B. However, this is only an example and should not be construed as limiting. Alternatively, the number of the oriented steel sheets 202A may be equal to or less than the number of the non-oriented steel sheets 202B. That is to say, a predetermined number of one or more non-oriented steel sheets 202B may be sandwiched between two oriented steel sheets 202A.

### (Other variations of exemplary embodiment)

Next, other variations of the exemplary embodiment will be enumerated one after another. Note that the variations to be described below may be adopted in combination as appropriate. The variations to be described below may also be adopted as appropriate in combination with any of the variations described above.

The outer peripheral shape of the outer peripheral portion 22 does not have to be a polygonal shape such as a regular dodecagonal shape but may also be a circular shape.

The housing that houses the stator 2 and the rotor 5 may hold the stator core 20. The housing includes an end plate 9 (refer to FIG. 2) and a cover attached to the end plate 9. The housing may hold the stator core 20 indirectly by, for example, holding a pole passed through a through hole, which runs through the stator core 20 along the axis of the output shaft 51 of the rotor 5, for example. In addition, the housing may also hold the stator core 20 by, for example, clamping the stator core 20 from both sides along the axis of the output shaft 51 of the rotor 5. Furthermore, the housing may further hold the stator core 20 at multiple points on the outer edge thereof, for example. Making the housing hold the stator core 20 may reduce the backlash of the stator core 20. This reduces, for example, the backlash between the plurality of teeth 4 of the stator core 20 and the outer peripheral portion 22 and the backlash between the plurality of outer peripheral pieces 220.

Optionally, the motor 1 may include a holding member for holding the rotor 5 and rotating along with the rotor 5. The holding member may hold the rotor core 6 indirectly by, for example, holding a pole passed through a through hole, which runs through the rotor core 6 along the axis of the output shaft 51 of the rotor 5, for example. In addition, the holding member may also hold the rotor core 6 by, for example, clamping the rotor core 6 from both sides along the axis of the output shaft 51 of the rotor 5. Making the holding member hold the rotor 5 may reduce the backlash of the rotor 5. This reduces, for example, the backlash between the shaft holder 61 and the rotor body 62 of the rotor 5 and the backlash between the plurality of fan-shaped portions 621.

Each of the steel sheets 601 that form the shaft holder 61 of the rotor core 6 may also be manufactured by extending a single sheet as a prototype of the steel sheet 601 such that the plurality of fan-shaped portions 621 are arranged side by side in a ring while making the sheet an oriented one. In that case, the steel sheet 601 in an unbent state may already have a shape in which the plurality of fan-shaped portions 621 are arranged side by side in a ring, contrary to the exemplary embodiment in which the plurality of fan-shaped portions 621 are turned into a ring pattern by bending the steel sheet 601.

Likewise, each of the steel sheets 201 that form the central core 21 of the stator core 20 may also be manufactured by extending a single sheet as a prototype of the steel sheet 201 such that the plurality of teeth 4 are arranged side by side in a ring while making the sheet an oriented one. In that case, the steel sheet 201 in an unbent state may already have a shape in which the plurality of teeth 4 are arranged side by side in a ring, contrary to the exemplary embodiment in which the plurality of teeth 4 are turned into a ring pattern by bending the steel sheet 201.

Each of the plurality of permanent magnets 7 may also be held by the rotor core 6 with magnetic suction between the rotor core 6 and the permanent magnet 7 itself without using any adhesive.

The plurality of teeth 4 may be formed integrally with the outer peripheral portion 22.

The inner cylindrical portion 3 may be divided into multiple pieces in regions between the plurality of teeth 4.

The motor 1 does not have to be installed in the electric tool 10. Alternatively, the motor 1 may also be installed in an electric bicycle, an electric assist bicycle, or an electric vehicle, for example.

### (Recapitulation)

The exemplary embodiment and its variations described above are specific implementations of the following aspects of the present disclosure.

An electric tool (10) according to a first aspect includes a motor (1). The motor (1) includes a stator (2) and a rotor (5). The rotor (5) rotates with respect to the stator (2). At least one of the stator (2) or the rotor (5) includes a core (stator core (20) or rotor core (6)) that includes an oriented steel sheet.

This configuration may increase the torque of the motor (1) compared to a situation where the core (stator core (20) or rotor core (6)) includes only non-oriented steel sheets.

In an electric tool (10) according to a second aspect, which may be implemented in conjunction with the first aspect, at least one of the stator (2) or the rotor (5) includes the core (stator core (20) or rotor core (6)) that includes the oriented steel sheet and a non-oriented steel sheet.

According to this configuration, not only oriented steel sheets but also non-oriented steel sheets, which are easily machinable, are used to make the core (stator core (20) or rotor core (6)), thus making it easier to manufacture the core.

In an electric tool (10) according to a third aspect, which may be implemented in conjunction with the second aspect, at least one of the stator (2) or the rotor (5) includes the core (stator core (20) or rotor core (6)) configured as a laminated core having a laminated structure in which the oriented steel sheet and the non-oriented steel sheet are stacked.

This configuration allows the core (stator core (20) or rotor core (6)) that uses both oriented steel sheets and non-oriented steel sheets to be easily manufactured by stacking the oriented steel sheets and the non-oriented steel sheets one on top of another.

In an electric tool (10) according to a fourth aspect, which may be implemented in conjunction with any one of the first to third aspects, the motor (1) is a brushless motor including the rotor (5) and the stator (2). The rotor (5) includes a rotor core (6) and a plurality of permanent magnets (7). The plurality of permanent magnets (7) are held by the rotor core (6). The stator (2) includes a stator core (20) and a plurality of coils (23). The stator core (20) is arranged to surround the rotor core (6). The plurality of coils (23) are wound around the stator core (20). At least one of the rotor core (6) or the stator core (20) is the core including the oriented steel sheet.

This configuration may increase the torque of a brushless motor.

In an electric tool (10) according to a fifth aspect, which may be implemented in conjunction with the fourth aspect, the rotor core (6) includes the oriented steel sheet.

This configuration may increase the torque of a brushless motor.

In an electric tool (10) according to a sixth aspect, which may be implemented in conjunction with the fifth aspect, the plurality of permanent magnets (7) are arranged as spokes around a center of the rotor core (6).

This configuration may reduce the number of permanent magnets (7) per magnetic pole.

In an electric tool (10) according to a seventh aspect, which may be implemented in conjunction with any one of the fourth to sixth aspects, the stator core (20) includes the oriented steel sheet.

This configuration may increase the torque of a brushless motor.

In an electric tool (10) according to an eighth aspect, which may be implemented in conjunction with the seventh aspect, the stator core (20) includes an outer peripheral portion (22) having a cylindrical shape and a plurality of teeth (4). The outer peripheral portion (22) is arranged to surround the rotor core (6). The plurality of teeth (4) protrude from the outer peripheral portion (22) toward the rotor core (6). The plurality of coils (23) are wound around the plurality of teeth (4). Each of the plurality of teeth (4) includes the oriented steel sheet in which magnetic resistivity along a radius of the outer peripheral portion (22) is less than magnetic resistivity along a circumference of the outer peripheral portion (22). The outer peripheral portion (22) is formed out of a non-oriented steel sheet.

This configuration makes it easier to manufacture the outer peripheral portion (22) than in a situation where the outer peripheral portion (22) includes an oriented steel sheet.

In an electric tool (10) according to a ninth aspect, which may be implemented in conjunction with the seventh aspect, the stator core (20) includes an outer peripheral portion (22) having a cylindrical shape and a plurality of teeth (4). The outer peripheral portion (22) is arranged to surround the rotor core (6). The plurality of teeth (4) protrude from the outer peripheral portion (22) toward the rotor core (6). The plurality of coils (23) are wound around the plurality of teeth (4). Each of the plurality of teeth (4) includes the oriented steel sheet in which magnetic resistivity along a radius of the outer peripheral portion (22) is less than magnetic resistivity along a circumference of the outer peripheral portion (22). The outer peripheral portion (22) includes the oriented steel sheet in which the magnetic resistivity along the circumference of the outer peripheral portion (22) is less than the magnetic resistivity along the radius of the outer peripheral portion (22).

This configuration may reduce the iron loss to be caused by the outer peripheral portion (22) compared to a situation where the outer peripheral portion (22) includes no oriented steel sheets.

In an electric tool (10) according to a tenth aspect, which may be implemented in conjunction with any one of the first to ninth aspects, the oriented steel sheet of the core (stator core (20) or rotor core (6)) includes a radial portion. In the radial portion, when viewed along an axis of a rotary shaft of the rotor (5), a direction in which magnetic resistivity is minimum is aligned with a radial direction defined with respect to the rotary shaft.

This configuration allows the radial portion to exhibit substantially the same characteristics with respect to the rotation of the rotor (5), no matter whether the rotor (5) rotates in one direction or in the direction opposite from the one direction.

In an electric tool (10) according to an eleventh aspect, which may be implemented in conjunction with any one of the first to tenth aspects, the oriented steel sheet of the core (stator core (20) or rotor core (6)) includes a tilted portion. In the tilted portion, when viewed along an axis of a rotary shaft of the rotor (5), a direction in which magnetic resistivity is minimum is oblique to a radial direction defined with respect to the rotary shaft.

This configuration improves the characteristics of the motor (1) when the rotor (5) rotates in one direction, compared to a situation where the direction in which the magnetic resistivity is minimum is aligned with the radial direction defined with respect to the rotary shaft.

In an electric tool (10) according to a twelfth aspect, which may be implemented in conjunction with any one of the first to eleventh aspects, the core (stator core (20) or rotor core (6)) includes a plurality of divided cores that are divided when viewed along an axis of a rotary shaft of the rotor (5). The plurality of divided cores are coupled together.

This configuration makes it easier to manufacture the core than in a situation where the core (stator core (20) or rotor core (6)) is not divided into a plurality of divided cores.

In an electric tool (10) according to a thirteenth aspect, which may be implemented in conjunction with the twelfth aspect, the plurality of divided cores are fitted into each other and thereby coupled together.

This configuration allows the plurality of divided cores to be coupled together easily.

An electric tool (10) according to a fourteenth aspect, which may be implemented in conjunction with the twelfth or thirteenth aspect, includes a filling portion (402). The filling portion (402) fills gaps around the plurality of divided cores.

This configuration may reduce the backlash of the plurality of divided cores.

Note that the constituent elements according to the second to fourteenth aspects are not essential constituent elements for the electric tool (10) but may be omitted as appropriate.

A motor (1) according to a fifteenth aspect includes a stator (2) and a rotor (5). The rotor (5) rotates with respect to the stator (2). At least one of the stator (2) or the rotor (5) includes a core (stator core (20) or rotor core (6)) that includes an oriented steel sheet.

This configuration may increase the torque of the motor (1) compared to a situation where the core (stator core (20) or rotor core (6)) includes only non-oriented steel sheets.

### Reference Signs List

- 1: Motor
- 10: Electric Tool
- 2: Stator
- 20: Stator Core
- 22: Outer Peripheral Portion
- 23: Coil
- 4: Tooth
- 402: Filling Portion
- 5: Rotor
- 6: Rotor Core
- 7: Permanent Magnet

## Claims

1. An electric tool comprising a motor, the motor including: a stator; and a rotor configured to rotate with respect to the stator,
at least one of the stator or the rotor including a core that includes an oriented steel sheet.

2. The electric tool of claim 1, wherein
at least one of the stator or the rotor includes the core that includes the oriented steel sheet and a non-oriented steel sheet.

3. The electric tool of claim 2, wherein
at least one of the stator or the rotor includes the core configured as a laminated core having a laminated structure in which the oriented steel sheet and the non-oriented steel sheet are stacked.

4. The electric tool of any one of claims 1 to 3, wherein
the motor is a brushless motor, the brushless motor including:
the rotor including a rotor core and a plurality of permanent magnets held by the rotor core; and
the stator including a stator core arranged to surround the rotor core and a plurality of coils wound around the stator core, and
at least one of the rotor core or the stator core is the core including the oriented steel sheet.

5. The electric tool of claim 4, wherein
the rotor core includes the oriented steel sheet.

6. The electric tool of claim 5, wherein
the plurality of permanent magnets are arranged as spokes around a center of the rotor core.

7. The electric tool of any one of claims 4 to 6, wherein
the stator core includes the oriented steel sheet.

8. The electric tool of claim 7, wherein
the stator core includes:
an outer peripheral portion having a cylindrical shape and arranged to surround the rotor core; and
a plurality of teeth protruding from the outer peripheral portion toward the rotor core,
the plurality of coils are wound around the plurality of teeth,
each of the plurality of teeth includes the oriented steel sheet in which magnetic resistivity along a radius of the outer peripheral portion is less than magnetic resistivity along a circumference of the outer peripheral portion, and
the outer peripheral portion is formed out of a non-oriented steel sheet.

9. The electric tool of claim 7, wherein
the stator core includes:
an outer peripheral portion having a cylindrical shape and arranged to surround the rotor core; and
a plurality of teeth protruding from the outer peripheral portion toward the rotor core,
the plurality of coils are wound around the plurality of teeth,
each of the plurality of teeth includes the oriented steel sheet in which magnetic resistivity along a radius of the outer peripheral portion is less than magnetic resistivity along a circumference of the outer peripheral portion, and
the outer peripheral portion includes the oriented steel sheet in which the magnetic resistivity along the circumference of the outer peripheral portion is less than the magnetic resistivity along the radius of the outer peripheral portion.

10. The electric tool of any one of claims 1 to 9, wherein
the oriented steel sheet of the core includes a radial portion in which when viewed along an axis of a rotary shaft of the rotor, a direction in which magnetic resistivity is minimum is aligned with a radial direction defined with respect to the rotary shaft.

11. The electric tool of any one of claims 1 to 10, wherein
the oriented steel sheet of the core includes a tilted portion in which when viewed along an axis of a rotary shaft of the rotor, a direction in which magnetic resistivity is minimum is oblique to a radial direction defined with respect to the rotary shaft.

12. The electric tool of any one of claims 1 to 11, wherein
the core includes a plurality of divided cores that are divided when viewed along an axis of a rotary shaft of the rotor, and
the plurality of divided cores are coupled together.

13. The electric tool of claim 12, wherein
the plurality of divided cores are fitted into each other and thereby coupled together.

14. The electric tool of claim 12 or 13, comprising a filling portion filling gaps around the plurality of divided cores.

15. A motor comprising: a stator; and a rotor configured to rotate with respect to the stator,
at least one of the stator or the rotor including a core that includes an oriented steel sheet.
